# EUROPÄISCHE PATENTANMELDUNG

(11) **EP 2 083 026 A2**
(43) Veröffentlichungstag der Anmeldung: **29.07.2009**
(21) Anmeldenummer: 09000324.5
(22) Anmeldetag: 13.01.2009
(51) Int. Cl.: C08G 18/32, C08G 18/40, C08G 18/48, C08G 18/66, C08L 75/04, C08L 75/06

(54) **Thermoplastische Polyurethane und deren Verwendung**

(30) Priorität: 25.01.2008 DE 102008006004
(71) Anmelder: Bayer MaterialScience AG, 51368 Leverkusen (DE)
(72) Erfinder: Peerlings, Henricus, Dr., 42699 Solingen (DE); Winkler, Juergen, 40764 Langenfeld (DE); Shafiq, Faisal, Dr., 41564 Kaarst (DE); Broich, Markus, 41836 Hückelhoven (DE)

(57) **Zusammenfassung**

Die vorliegende Erfindung betrifft thermoplastische Polyurethanformmassen mit verbesserter Oberflächenbeständigkeit (Schreib- und Kratzbeständigkeit) und guter technischer Verarbeitbarkeit sowie deren Verwendung.

## Beschreibung

Die vorliegende Erfindung betrifft thermoplastische Polyurethanformmassen mit verbesserter Oberflächenbeständigkeit (Schreib- und Kratzbeständigkeit) und guter technischer Verarbeitbarkeit sowie deren Verwendung.

Thermoplastische Polyurethane (TPU) sind wegen ihrer guten Elastomereigenschaften und thermoplastischen Verarbeitbarkeit von großer technischer Bedeutung. Eine Übersicht über die Herstellung, Eigenschaften und Anwendungen von TPU ist z.B. im Kunststoff Handbuch [G. Becker, D. Braun], Band 7 "Polyurethane", München, Wien, Carl Hanser Verlag, 1983 gegeben.

TPU werden zumeist aus linearen Polyolen (Makrodiolen), wie Polyester-, Polyether- oder Polycarbonatdiolen, organischen Diisocyanaten und kurzkettigen, zumeist difunktionellen Alkoholen (Kettenverlängerern) aufgebaut. Sie können kontinuierlich oder diskontinuierlich hergestellt werden. Die bekanntesten Herstellverfahren sind das Bandverfahren (GB-A 1 057 018) und das Extruderverfahren (DE-A 19 64 834).

Der Aufbau der thermoplastisch verarbeitbaren Polyurethanelastomere kann entweder schrittweise (Prepolymerdosierverfahren) oder durch die gleichzeitige Reaktion aller Komponenten in einer Stufe (one-shot-Dosierverfahren) erfolgen.

In DE-A 102 30 020 wird die Verwendung von Polyorganosiloxanen zur Verbesserung der Rubbel- und Kratzbeständigkeit (mechanische Oberflächenbeständigkeit) für TPU beschrieben. Bei der Verarbeitung der TPU, die diese Additive enthalten, treten allerdings nach einiger Zeit (nach einigen Schüssen) im Spritzgießverfahren Oberflächenstörungen auf, welche zu unerwünschten erhöhten Ausschussraten führen.

Aufgabe der vorliegenden Erfindung war es daher, thermoplastische Polyurethane (TPU) zur Verfügung zu stellen, die eine verbesserte mechanische Oberflächenbeständigkeit haben und gleichzeitig eine gute technische Verarbeitbarkeit sowie keine Oberflächenstörungen bei der Verarbeitung aufweisen.

Diese Aufgabe konnte durch TPUs mit einer speziellen Zusammensetzung gelöst werden.

Gegenstand der vorliegenden Erfindung sind daher thermoplastische Polyurethane, die erhältlich sind aus
a) einem oder mehreren organischen Diisocyanaten,
b) mindestens einem niedermolekularen Polyol mit im Mittel mindestens 1,8 und höchstens 3,0 zerewitinoffaktiven Wasserstoffatomen und einem zahlenmittleren Molekulargewicht Mₙ von 60 bis 400 g/mol als Kettenverlängerer und
c) mindestens einer Polyol-Komponente mit einem zahlenmittleren Molekulargewicht Mₙ von 450 bis 10 000 g/mol und im Mittel mindestens 1,8 bis höchstens 3,0 zerewitinoffaktiven Wasserstoffatomen,
   wobei das Verhältnis der Anzahl der Isocyanatgruppen in Komponente a) zu der Anzahl der gegenüber Isocyanat reaktiven Gruppen in Komponenten b), c) und gegebenenfalls g) 0,9:1 bis 1,1:1 beträgt,
   in Gegenwart von
d) 0,4 bis 10 Gew.-%, bezogen auf thermoplastisches Polyurethan, eines Gemisches aus Polyorganosiloxanen der allgemeinen Formel (R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 6.000 sein kann, wobei das Gemisch aus
   d1) 0,2 bis 2 Gew.-%, bezogen auf thermoplastisches Polyurethan, eines oder mehrerer Polyorganosiloxane (R₂SiO)ₙ mit n = 3 bis 300 und
   d2) 0,2 bis 8 Gew.-%, bezogen auf thermoplastisches Polyurethan, eines oder mehrerer Polyorganosiloxane (R₂SiO)ₙ mit n = 1.000 bis 6.000 besteht
      unter Zugabe von
e) gegebenenfalls Katalysatoren,
f) gegebenenfalls Zusatzmitteln und/oder Hilfsstoffen,
g) gegebenenfalls Kettenabbrechern.

Als organische Diisocyanate (a) können aliphatische, cycloaliphatische, araliphatische, aromatische und heterocyclische Diisocyanate oder beliebige Gemische dieser Diisocyanate verwendet werden (vgl. HOUBEN-WEYL "Methoden der organischen Chemie", Band E20 "Makromolekulare Stoffe", Georg Thieme Verlag, Stuttgart, New York 1987, S. 1587-1593 oder Justus Liebigs Annalen der Chemie, 562, Seiten 75 bis 136).

Im Einzelnen seien beispielhaft genannt: aliphatische Diisocyanate wie Ethylendiisocyanat, 1,4-Tetramethylendiisocyanat, 1,6-Hexamethylendiisocyanat, 1,12-Dodecandiisocyanat; cycloaliphatische Diisocyanate wie Isophorondiisocyanat, 1,4-Cyclohexandiisocyanat, 1-Methyl-2,4-cyclohexandiisocyanat und 1-Methyl-2,6-cyclohexandiisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; außerdem aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte oder carbodiimidmodifizierte flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise verwendet werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-% und insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden, es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylen-polyisocyanate.

Die Kettenverlängerungsmittel b) besitzen im Mittel vorzugsweise 1,8 bis 3,0 zerewitinoffaktive Wasserstoffatome und haben ein Molekulargewicht von 60 bis 400. Hierunter versteht man vorzugsweise solche mit zwei bis drei, besonders bevorzugt mit zwei Hydroxylgruppen.

Als Kettenverlängerer b) werden bevorzugt eine oder mehrere Verbindungen eingesetzt aus der Gruppe der aliphatischen Diole mit 2 bis 14 Kohlenstoffatomen, wie z.B. Ethandiol, 1,2-Propandiol, 1,3-Propandiol, 1,4-Butandiol, 2,3-Butandiol, 1,5-Pentandiol, 1,6-Hexandiol, Diethylenglykol, Dipropylenglykol, 1,4-Cyclohexandiol, 1,4-Dimethanolcyclohexan und Neopentylglykol. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A. Besonders bevorzugt werden als Kettenverlängerer Ethandiol, 1,4-Butandiol, 1,6-Hexandiol, 1,4-Dimethanolcyclohexan, 1,4-Di(β-hydroxyethyl)-hydrochinon oder 1,4-Di(β-hydroxyethyl)-bisphenol A verwendet. Daneben können auch kleinere Mengen an Triolen zugesetzt werden.

Als Polyol-Komponente c) werden solche mit im Mittel mindestens 1,8 bis höchstens 3,0 zerewitinoffaktiven Wasserstoffatomen und einem zahlenmittleren Molekulargewicht M̅ₙ von 450 bis 10.000 eingesetzt. Produktionsbedingt enthalten die Polyole oft kleine Mengen an nicht-linearen Verbindungen. Häufig spricht man daher auch von "im Wesentlichen linearen Polyolen". Bevorzugt sind Polyester-, Polyether-, Polycarbonat-Diole oder Gemische aus diesen.

Insbesondere zwei bis drei, vorzugsweise zwei Hydroxylgruppen aufweisende Verbindungen sind bevorzugt, speziell solche mit zahlenmittleren Molekulargewichten M̅ₙ von 450 bis 6.000, besonders bevorzugt solche mit zahlenmittleren Molekulargewichten M̅ₙ von 600 bis 4.500; Hydroxylgruppen aufweisende Polyester, Polyether und Polycarbonate sind insbesondere bevorzugt.

Geeignete Polyether-Diole können dadurch hergestellt werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2-Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyl-diethanolamine, beispielsweise N-Methyl-diethanolamin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherpolyole sind ferner die hydroxylgruppenhaltigen Polymerisationsprodukte des Tetrahydrofurans. Es können auch trifunktionelle Polyether in Anteilen von 0 bis 30 Gew.-% bezogen auf die bifunktionellen Polyether eingesetzt werden, jedoch höchstens in einer solchen Menge, dass ein noch thermoplastisch verarbeitbares Produkt entsteht. Die im Wesentlichen linearen Polyether-Diole besitzen vorzugsweise zahlenmittlere Molekulargewichte M̅ₙ von 450 bis 6.000. Sie können sowohl einzeln als auch in Form von Mischungen untereinander zur Anwendung kommen.

Geeignete Polyester-Diole können beispielsweise aus Dicarbonsäuren mit 2 bis 12 Kohlenstoffatomen, vorzugsweise 4 bis 6 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft sein, anstelle der Dicarbonsäuren die entsprechenden Dicarbonsäurederivate, wie Carbonsäurediester mit 1 bis 4 Kohlenstoffatomen im Alkoholrest, Carbonsäureanhydride oder Carbonsäurechloride zu verwenden. Beispiele für mehrwertige Alkohole sind Glykole mit 2 bis 10, vorzugsweise 2 bis 6 Kohlenstoffatomen, z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol oder Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren, wie ω-Hydroxycapronsäure oder Polymerisationsprodukte von Lactonen, z.B. gegebenenfalls substituierten ω-Caprolactonen. Als Polyester-Diole vorzugsweise verwendet werden Ethandiol-polyadipate, 1,4-Butandiolpolyadipate, Ethandiol-1,4-butandiolpolyadipate, 1,6-Hexandiol-neopentylglykolpolyadipate, 1,6-Hexandiol-1,4-butandiolpolyadipate und Polycaprolactone. Die Polyester-Diole besitzen zahlenmittlere Molekulargewichte M̅ₙ von 450 bis 10.000 und können einzeln oder in Form von Mischungen untereinander zur Anwendung kommen.

Als Polyorganosiloxane d) werden Verbindungen der allgemeinen Formel (R₂SiO)ₙ, wobei R einen organischen Kohlenwasserstoffrest darstellt, der sowohl linear als auch verzweigt aufgebaut sein kann, und 1 bis 27 Kohlenstoffatome aufweist. Von den Wiederholungseinheiten liegen mindestens 3 und höchstens 6.000 vor. Die Polyorganosiloxane d1) und d2) können in Substanz oder als Masterbatch in einer Trägersubstanz zugegeben werden. Als Trägersubstanz kommen thermoplastische Elastomere in Frage, wie beispielsweise Polyetherester, Polyesterester, TPU, Styrol-Ethylen-Butadien-Styrol (SEBS), Acrylnitril-Butadien-Styrol (ABS), Styrol-Acrylnitril (SAN), Polyamid (PA), Acrylat-Styrol-Acrylat-Blockcopolymer (ASA), Polybutylenterephthalat (PBT), Polycarbonat (PC), Polyetherblockamid (PEBA), Polymethylmethacrylat (PMMA), Polyoxymethylen (POM) oder Polyvinylchlorid (PVC).

Das Polyorganosiloxan kann bereits bei der Herstellung des TPU den TPU-Rohstoffen oder anschließend dem fertigen TPU, z.B. mittels Kompoundierung, zugegeben werden.

Die relativen Mengen der zerewitinoffaktiven Verbindungen werden bevorzugt so gewählt, dass das Verhältnis der Anzahl der Isocyanatgruppen zu der Anzahl der gegenüber Isocyanat reaktiven Gruppen 0,9:1 bis 1,1:1 beträgt.

Geeignete Katalysatoren e) sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy)ethanol, Diazabicyclo[2,2,2]octan und ähnliche sowie insbesondere organische Metallverbindungen wie Titansäureester, Eisenverbindungen, Wismuthverbindungen oder Zinnverbindungen, wie Zinndiacetat, Zinndioctoat, Zinndilaurat oder die Zinndialkylsalze aliphatischer Carbonsäuren, wie Dibutylzinndiacetat oder Dibutylzinndilaurat oder ähnliche. Bevorzugte Katalysatoren sind organische Metallverbindungen, insbesondere Titansäureester, Eisen-, Zinn-, Zirkon- und Wismuthverbindungen. Die Gesamtmenge an Katalysatoren in den erfindungsgemäßen TPU beträgt in der Regel vorzugsweise 0 bis 5 Gew.-%, bevorzugt 0 bis 2 Gew.-%, bezogen auf die Gesamtmenge an TPU.

Die erfindungsgemäßen, thermoplastischen Polyurethane können Hilfs- und Zusatzstoffe f) enthalten. Typische Hilfs- und Zusatzstoffe sind Gleitmittel und Entformungsmittel, wie Fettsäureester, deren Metallseifen, Fettsäureamide, Fettsäureesteramide, Antiblockmittel, Flammschutzmittel, Weichmacher (wie z.B. beschrieben in M. Szycher in M. Szycher's Handbook of Polyurethanes, 1999, CRC Press, Seite 8-28 bis 8-30. Beispielhaft seien genannt Phosphate, Carboxylate (wie z.B. Phthalate, Adipate, Sebacate), Silikone und Alkylsulfonsäureester), Inhibitoren, Stabilisatoren gegen Hydrolyse, Hitze und Verfärbung, Lichtstabilisatoren (vorzugsweise UV-Stabilisatoren, Antioxidantien und/oder HALS-Verbindungen. Nähere Angaben sind der Fachliteratur zu entnehmen und beispielsweise in Plastics Additives Handbook, 2001 5th. Ed., Carl Hanser Verlag, München beschrieben), Farbstoffe, Pigmente, anorganische und/oder organische Füllstoffe, fungistatisch und bakteriostatisch wirkende Substanzen und deren Mischungen.

Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964 , dem Taschenbuch für Kunststoff-Additive von R.Gächter u. H.Müller (Hanser Verlag München 1990) oder der DE-A 29 01 774 zu entnehmen.

Weitere Zusätze, die in das TPU eingearbeitet werden können, sind Thermoplaste, beispielsweise Polycarbonate und Acrylnitril/Butadien/Styrol-Terpolymere (ABS), insbesondere ABS. Auch andere Elastomere wie Kautschuk, Ethylen/Vinylacetatcopolymere, Styrol/Butadiencopolymere sowie andere TPU können verwendet werden.

Die Zugabe der Hilfs- und Zusatzstoffe f) kann während des Herstellprozesses des TPU und/oder während einer zusätzlichen Kompoundierung des TPU erfolgen.

Gegenüber Isocyanaten reagierende, monofunktionelle Verbindungen können in Anteilen bis zu 2 Gew.-%, bezogen auf TPU, als sogenannte Kettenabbrecher g) eingesetzt werden. Geeignet sind z.B. Monoamine, wie Butyl- und Dibutylamin, Octylamin, Stearylamin, N-Methylstearylamin, Pyrrolidin, Piperidin oder Cyclohexylamin, Monoalkohole wie Butanol, 2-Ethylhexanol, Octanol, Dodecanol, Stearylalkohol, die verschiedenen Amylalkohole, Cyclohexanol und Ethylenglykolmonomethylether.

Die erfindungsgemäßen TPU werden vorzugsweise im Spritzgießverfahren, Extrusionsverfahren und/ oder Powder-Slush-Verfahren eingesetzt.

Die erfindungsgemäßen TPU werden bevorzugt zur Herstellung von wärmebeständigen Formteilen und Häuten mit guter mechanischer Oberflächenbeständigkeit eingesetzt.

Bevorzugt werden die TPU für die Innenausstattung von Kraftfahrzeugen verwendet.

Die Erfindung soll anhand der nachfolgenden Beispiele näher erläutert werden.

### Im Folgenden verwendete Abkürzungen:

- PE 225B: Polyesterdiol mit einem Molekulargewicht von Mₙ = 2250 g/mol; Produkt der Firma Bayer MaterialScience AG
- Acclaim^{®} 2220 N: Polyetherdiol (Mischether aus C₃- und C₂-Alkyleneinheiten) mit einem Molekulargewicht von Mₙ = 2250 g/mol; Produkt der Firma Bayer MaterialScience AG
- HDI: 1,6-Hexamethylendiisocyanat
- MDI: 4,4'-Diphenylmethandiisocyanat
- HDO: 1,6-Hexandiol
- BDO: 1,4-Butandiol
- Irganox^{®} 1010: Antioxidant der Firma Ciba Specialty Chemicals GmbH
- Tinuvin^{®} 234: Licht-Stabilisator auf Basis eines Benzotriazoles der Firma Ciba Specialty Chemicals GmbH
- EBS: Ethylen-bis-stearylamid
- DBTL: Dibutylzinndilaurat
- SO: Zinndioctoat
- MB50-017: Siloxan-Masterbatch von Dow Corning bestend aus 50% Polysiloxan (n∼3000) und 50% eines aromatischen TPU
- MB35-027: Siloxan-Masterbatch von Dow Corning bestend aus 35% Polysiloxan (n∼3000) und 50% eines aliphatischen TPU
- M350: Polyorganosiloxan mit n∼100-150; Silikonöl der Firma GE Silicones

### Beispiele

### Herstellung eines aromatischen TPU (TPU-1):

Ein Gemisch aus 643 g PE225B, 71 g BDO, 2 g Irganox^{®} 1010, 5 g Tinuvin^{®} 234, 2 g EBS und 50 ppm SO (bezogen auf die Polyolmenge) wurde unter Rühren mit einem Flügelrührer mit einer Drehzahl von 500 Umdrehungen pro Minute (UpM) auf 160°C erhitzt. Danach wurden 273 g MDI zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert. Dieses Material wurde als Basismaterial für die Beispiele 1 bis 3 verwendet.

### Herstellung eines aliphatischen TPU (TPU-2):

Ein Gemisch aus 500 g PE 225B, 214 g Acclaim^{®} 2220N, 91 g HDO, 5 g Irganox^{®} 1010, 5 g Tinuvin^{®} 234 und 50 ppm DBTL (bezogen auf die Polyolmenge) wurde unter Rühren mit einem Flügelrührer mit einer Drehzahl von 500 Umdrehungen pro Minute (UpM) auf 130°C erhitzt. Danach wurden 183 g HDI zugegeben. Anschließend wurde bis zum maximal möglichen Viskositätsanstieg gerührt und danach das TPU ausgegossen. Das Material wurde 30 min. bei 80°C thermisch nachbehandelt und anschließend granuliert. Dieses Material wurde als Basismaterial für die Beispiele 4 bis 9 verwendet.

Zu den gemäß den allgemeinen Beschreibungen hergestellten TPU-Granulaten wurden Masterbatche bzw. Silikonöl (Die exakten Rezepturen sind der Tabelle 1 zu entnehmen.) und Farbruß (2 Gew.-%, bezogen auf TPU, Elftex^{®} 435 von der Firma Cabot) zugegeben. Auf einem Extruder des Typs DSE 25, 4 Z, 360 Nm mit folgendem Aufbau:
1. kalte Einzugszone mit Förderelementen,
2. erste Heizzone (165°C) mit erster Knetzone,
3. zweite Heizzone (175°C) mit Förderelemente und zweiter Knetzone,
4. dritte Heizzone (180°C) mit Knetzone, Förderelemente und Vakuumentgasung,
5. Umlenkkopf (185°C) und Düse (180°C),
   mit einer Förderleistung von 10 kg/h bei einer Drehzahl von 220 U/min wurden die Gemische extrudiert, anschließend mit einem Strang-Granulator zu Granulat und mit einer Spritzgießmaschine zu Spritzplatten verarbeitet.

### Bestimmung der technischen Verarbeitbarkeit:

Beim Spritzgießen wurde auf die technische Verarbeitbarkeit geachtet. Dabei wurde z.B. das Einzugsverhalten im Trichter der Spritzgießmaschine bewertet. Es wurde kontrolliert, ob Störungen und/oder ein Belag auf dem Formteil sichtbar wurden. Ebenfalls wurde beurteilt, wie schnell ein Formteilbelag gebildet wurde und wie stark dieser war. Dabei wurde folgende Benotung zwecks Beurteilung eingeführt:
Note 1: kein Belag sichtbar;
Note 2: wenig Belag sichtbar und wird auch nicht stärker;
Note 3: wenig Belag sichtbar, wird jedoch nach weiteren Schüssen immer stärker;
Note 4: schnell viel Belag, der auch rasant stärker wird bei weiteren Schüssen;
Nur eine Benotung mit 1 oder 2 ist akzeptabel.

### Bestimmung der Oberflächenempfindlichkeit

Für die Bestimmung der Oberflächenempfindlichkeit wurden zwei Tests durchgeführt:
Crockmetertest: Diese Tests wurden an einem Spritzgießkörper mit einer genarbten Oberfläche durchgeführt und zwar unter folgenden Bedingungen:
Rubbeldruck: 10N, Rubbelweg: 260 mm, Zeit pro Rubbel: 15 sec., Anzahl der Hübe: 100.
Durchführung: Das Baumwollscheuergewebe wurde unter die Auflagefläche gespannt und die Prüfung unter den oben beschriebenen Bedingungen durchgeführt. Dabei wurde die Beschädigung der Oberfläche qualitativ beurteilt. Die Benotung "schlecht" bedeutet ein visuell deutlich sichtbarer Abrieb der Oberfläche. Die Benotung "gut" bedeutet kein oder kaum sichtbarer Abrieb.
Kratztest: Dieser Test wurde mit einem Erichsen-Stab mit einem Hub und einer Kraft von 10 N auf eine genarbte Oberfläche durchgeführt. Dabei wurde die Beschädigung der Oberfläche qualitativ beurteilt. Die Benotung "schlecht" bedeutet eine visuell deutlich sichtbare Beschädigung der Oberfläche. Die Benotung "gut" bedeutet keine oder kaum sichtbare Oberflächenbeschädigung.

Die Ergebnisse der Untersuchungen sind der Tabelle zu entnehmen.

**Tabelle: Ergebnisse**

| **Beispiel** | **Art des Beispiels, TPU** | **Batch; Menge an Siloxan [%] im TPU-1 oder -2** | **Menge M350 [%]** | **Technische Verarbeitbarkeit** | **Crockmetertest** | **Kratztest** |
|---|---|---|---|---|---|---|
| **1** | Vergleich, TPU-1 | kein | kein | Note 1 | Schlecht | Schlecht |
| **2** | Vergleich, TPU-1 | MB50-017; 2,5 | Kein | Note 2 | Gut | Schlecht |
| **3** | erfindungsgemäß, TPU-1 | MB50-017; 2 | 0,5 | Note 2 | Gut | Gut |
| | | | | | | |
| **4** | Vergleich, TPU-2 | Kein | Kein | Note 1 | Schlecht | Schlecht |
| **5** | Vergleich, TPU-2 | MB35-027; 2,5 | Kein | Note 4 | Gut | Gut |
| **6** | erfindungsgemäß, TPU-2 | MB35-027; 2 | 0,5 | Note 2 | Gut | Gut |
| **7** | erfindungsgemäß, TPU-2 | MB35-027; 1,5 | 1 | Note 2 | Gut | Gut |
| **8** | erfindungsgemäß, TPU-2 | MB35-027; 0,5 | 2 | Note 1 | Gut | Gut |
| **9*** | Vergleich, TPU-2 | Kein | 2,5 | Note 1 | Gut | Schlecht |

| | | | | | | |
|---|---|---|---|---|---|---|
| *Bei diesem Versuch traten Einzugsprobleme im Trichter auf, wodurch Delaminierung auftrat. | | | | | | |

In den Beispielen 1 bis 3 wurde ein aromatisches TPU (TPU-1) verwendet. Ohne Polyorganosiloxan (Beispiel 1) ist die Oberflächenbeständigkeit schlecht. Bei der Verwendung von hochmolekularem Polyorganosiloxan (Beispiel 2) war das Ergebnis aus dem Crockmetertest zwar gut, aber der Kratztest wurde nicht bestanden. Das TPU aus Beispiel 3 erfüllte alle Anforderungen an die Oberflächenempfindlichkeit und erzielte eine gute technische Verarbeitbarkeit.

In den Beispielen 4 bis 9 wurde ein aliphatisches TPU (TPU-2) verwendet. In den Vergleichsbeispielen 4, 5 und 9 wurden kein Polyorganosiloxan (Beispiel 4), nur ein hochmolekulares Polyorganosiloxan (Beispiel 5) oder nur ein niedermolekulares Polyorganosiloxan (Beispiel 9) verwendet. Die TPU aus den Beispielen 4 und 9 zeigten ein schlechtes Ergebnis beim Kratztest. Bei Beispiel 9 gab es zudem Einzugsprobleme im Trichter der Spritzgießmaschine. Das Material aus Beispiel 5 hatte eine gute Oberflächenbeständigkeit, zeigte allerdings Probleme bei der technischen Verarbeitbarkeit.

Die TPU aus den erfindungsgemäßen Beispielen 6 bis 8, erfüllten alle Anforderungen an die Oberflächenempfindlichkeit und zeigten eine gute technische Verarbeitbarkeit.

## Patentansprüche

1. Thermoplastische Polyurethane erhältlich aus
a) einem oder mehreren organischen Diisocyanaten,
b) mindestens einem niedermolekularen Polyol mit im Mittel mindestens 1,8 und höchstens 3,0 zerewitinoffaktiven Wasserstoffatomen und einem zahlenmittleren Molekulargewicht Mₙ von 60 bis 400 g/mol als Kettenverlängerer und
c) mindestens einer Polyol-Komponente mit einem zahlenmittleren Molekulargewicht Mₙ von 450 bis 10.000 g/mol und im Mittel mindestens 1,8 bis höchstens 3,0 zerewitinoffaktiven Wasserstoffatomen,
wobei das Verhältnis der Anzahl der Isocyanatgruppen in Komponente a) zu der Anzahl der gegenüber Isocyanat reaktiven Gruppen in den Komponenten b), c) und gegebenenfalls g) 0,9:1 bis 1,1:1 beträgt,
in Gegenwart von
e) 0,4 bis 10 Gew.-%, bezogen auf thermoplastisches Polyurethan, eines Gemisches aus Polyorganosiloxanen der allgemeinen Formel (R₂SiO)ₙ, wobei R einen organischen Kohlenwasserstoffrest darstellt, der sowohl linear als auch verzweigt aufgebaut sein kann, und 1 bis 27 Kohlenstoffatome aufweist, und n eine ganze Zahl von 3 bis 6.000 sein kann, wobei das Gemisch aus
d1) 0,2 bis 2 Gew.-%, bezogen auf thermoplastisches Polyurethan, eines oder mehrerer Polyorganosiloxane (R₂SiO)ₙ mit n = 3 bis 300 und
d2) 0,2 bis 8 Gew.-%, bezogen auf thermoplastisches Polyurethan, eines oder mehrerer Polyorganosiloxane (R₂SiO)ₙ mit n = 1.000 bis 6.000 besteht
unter Zugabe von
e) gegebenenfalls Katalysatoren,
f) gegebenenfalls Zusatzmitteln und/oder Hilfsstoffen,
g) gegebenenfalls Kettenabbrechern.

2. Verwendung des thermoplastischen Polyurethans gemäß Anspruch 1 zur Herstellung von Formteilen und Häuten.

3. Verwendung des thermoplastischen Polyurethans gemäß Anspruch 1 im Spritzgieß-, Extrusions- und Powder-Slush-Verfahren.

4. Verwendung des thermoplastischen Polyurethans gemäß Anspruch 1 für die Innenausstattung in Kraftfahrzeugen.
